# EUROPEAN PATENT SPECIFICATION

(11) **EP 4 243 169 B1**
(45) Date of publication and mention of the grant of the patent: **04.02.2026**
(21) Application number: 22890403.3
(22) Date of filing: 03.11.2022
(51) Int. Cl.: H01M 50/178, H01M 50/105, H01M 50/193, B29C 53/04, B29C 53/38, B29C 67/00

(54) **CURVED BATTERY CELL**
GEKRÜMMTE BATTERIEZELLE
ÉLÉMENT DE BATTERIE INCURVÉ

(30) Priority: 03.11.2021 KR 20210149600; 02.11.2022 KR 20220144340
(43) Date of publication of application: 13.09.2023
(73) Proprietor: LG Energy Solution, Ltd., Seoul 07335 (KR)
(72) Inventor: KIM, Minjung, Daejeon 34122 (KR); LEE, Wooyong, Daejeon 34122 (KR)
(74) Representative: Plasseraud IP
(86) International application number: PCT/KR2022/017121
(87) International publication number: WO 2023/080672

(56) References cited:
- JP-A- 2016 136 508
- KR-A- 20150 096 325
- KR-A- 20170 047 756
- KR-A- 20170 047 756
- KR-A- 20170 101 120
- KR-A- 20200 038 134
- US-B2- 10 535 844

## Description

### [TECHNICAL FIELD]

### Cross Citation with Related Application(s)

This application claims the benefit of Korean Patent Application No. 10-2021-0149600 filed on November 3, 2021 and Korean Patent Application No. 10-2022-0144340 filed on November 2, 2022 in the Korean Intellectual Property Office.

The present disclosure relates to a bent battery cell.

### [BACKGROUND]

With the technology development and increased demand for mobile devices, demand for secondary batteries as energy sources has been rapidly increasing. Among such secondary batteries is a lithium secondary battery exhibiting a high energy density and operating voltage, a long cycle lifespan, and a low self-discharge rate, which is now commercialized and widely used.

Moreover, in recent years, the design itself of electronic devices has been acted as a very important element in consumers' choice of products, and the electronic devices have been gradually miniaturized and thinned according to the taste of consumer. To this end, there is a high necessity for miniaturizing and thinning a lithium secondary battery in order to minimize unnecessary waste of an internal space of each of the electronic devices. In addition, it is necessary for the lithium secondary battery to have various shapes corresponding to shapes of the electronic devices. In recent years, the demand for a curved battery, including a flexible battery, has increased.

Meanwhile, the secondary battery may be classified based on the shape of a battery case into a cylindrical or prismatic battery using metal can, and a pouch-type battery using a pouch-type secondary battery case made of a laminated sheet, wherein the shape of the pouch-type secondary battery is easily deformable, and thus it is used for the flexible battery.

Such a pouch-type secondary battery is manufactured by sealing an opening in a state in which an electrode assembly is housed in a battery case, and is made of a structure having a curved cross-section with reference to the direction in which the electrode lead extends, and the both-sided face sealing parts where the electrode lead does not protrude with reference to the direction in which the electrode lead extends have a structure that is bent toward the battery cell.

At this time, since the both-sided face sealing area is not constant due to the curved shape of the battery cell when the both-sided face sealing parts are bent, there is a problem that a specific sealing width cannot be secured.

Further, generally, in the step of housing the electrode assembly in a pouch-type battery case made of a laminated sheet, injecting an electrolyte solution in the case and sealing the case by heat-sealing, and the like, the pouch-type secondary battery causes contamination of the heat-sealed part (sealing part) in the process of injecting the electrolyte solution, excessive melting phenomenon in the innermost resin layer of laminated sheets, and/or protrusion of the inner resin layer to the outside due to pressurization, whereby it is difficult to maintain a completely sealed state even after heat-sealing, which causes a problem that moisture permeates easily and the electrolyte solution may leak.

KR 2017 0047756 discloses a battery cell.

Therefore, there is an urgent need to develop a technology for battery cells that can solve the above problems.

### [DETAILED DESCRIPTION OF THE INVENTION]

### [Technical Problem]

It is an object of the present disclosure to provide a battery cell that can solve the problem of sealing width non-uniformity that may occur in the both-sided face sealing parts of the curved battery cell, or the problem of electrolyte leakage.

### [Technical Solution]

The solution is presented in claim 1.

Wherein, the battery cell may be formed such that a cross section in a direction in which the electrode lead is formed has a curve in which both side ends are bent together in the same direction with respect to the central part.

At this time, a curvature radius R of the curve of the battery cell may be 90 mm to 100 mm.

The battery case may be a pouch-type battery case made of a laminated sheet including a resin layer and a metal layer.

Further, the both-sided face sealing parts may be bent in the direction of the battery cell. Meanwhile, the cutting part formed in the both-sided face sealing parts may be formed within a point of 1/3 to 2/3 of the total length of the both-sided face sealing parts in the direction in which the electrode leads are formed, and the cutting part may be cut from the outer end of the both-sided face sealing parts in an inward direction toward the storage part of the battery case so that a stress due to the curve of the battery cell is not concentrated in the center. Specifically, the cutting part may be formed in a straight line shape or a V-shape.

Further, the cutting part may be formed to a depth of 10% to 70% based on the sealing width from the outer end of the both-sided face sealing parts toward the storage part of the battery case.

According to the invention the UV glue coating is further formed on the cutting surface of the cutting part.

The sealing of the both-sided face sealing parts is performed, and the UV glue coating formed on the surface of the cutting part may be a coating in which an ultraviolet (UV) curable material is cured. At this time, the UV curable material may include at least one material selected from the group consisting of unsaturated polyester-based materials, polyester acrylates, epoxy acrylates, and urethane acrylates.

According to another embodiment of the present disclosure, there is provided a battery module comprising the above-mentioned battery cell.

### [BRIEF DESCRIPTION OF THE DRAWINGS]

Fig. 1 is a perspective view of a battery cell according to one embodiment of the present disclosure;
Fig. 2 is a perspective view of the battery cell before one side sealing part is bent in the battery cell of Fig. 1;
Fig. 3 is a cross-sectional view of the both-sided face sealing parts of the battery cell of Fig. 1; and
Fig. 4 is a photograph of the battery cell before the curved-shaped both-sided face sealing parts sealed according to the UV glue coating is bent.

### [DETAILED DESCRIPTION OF THE EMBODIMENTS]

Terms or words used in the present specification and claims should not be construed as limited to ordinary or dictionary terms, and the present disclosure should be construed with meanings and concepts that are consistent with the technical idea of the present disclosure based on the principle that the inventors may appropriately define concepts of the terms to appropriately describe their own disclosure in the best way. Accordingly, the embodiments described herein and the configurations shown in the drawings are only most preferable embodiments of the present disclosure and do not represent the entire spirit of the present disclosure, so it should be appreciated that there may be various equivalents and modifications that can replace the embodiments and the configurations at the time at which the present application is filed, and the scope of the present invention is not limited to the embodiments described below.

Hereinafter, the present disclosure will be described in detail with reference to the accompanying drawings. Terms or words used in the present specification and claims should not be construed as limited to ordinary or dictionary terms, and the present disclosure should be construed with meanings and concepts that are consistent with the technical idea of the present disclosure based on the principle that the inventors may appropriately define concepts of the terms to appropriately describe their own disclosure in the best way.

Further, the embodiments described herein and the configurations shown in the drawings are only most preferable embodiments of the present disclosure and do not represent the entire spirit of the present disclosure, so it should be appreciated that there may be various equivalents and modifications that can replace the embodiments and the configurations at the time at which the present application is filed.

According to one embodiment of the present disclosure, there is provided a battery cell that has a curved shape so that its cross section has a curve, wherein both-sided face sealing parts of a battery case are sealed by UV glue coating based on the direction in which electrode leads are formed, and a cutting part is formed at a central part in the longitudinal direction of each of the both-sided face sealing parts.

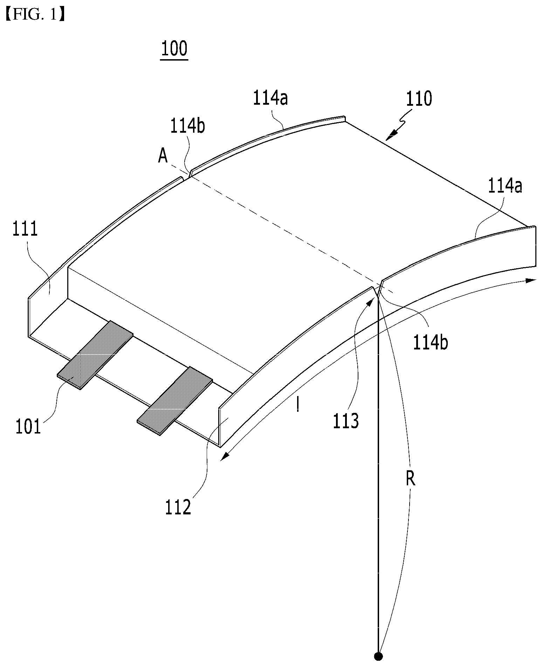

Fig. 1 shows a perspective view of a battery cell 100 according to one embodiment of the present disclosure.

Referring to Fig. 1, the battery cell 100 has a curved shape such that its cross section has a curve. At this time, the battery cell 100 is formed such that the cross section in the direction in which the electrode lead 101 is formed has a shape, i.e., a curve, in which both ends are bent together in the same direction with respect to the central axis A. Of course, the drawing shows a curved shape on the basis of the central part, but the curved part may not be the central part, and is not limited as long as both ends are bent around a certain reference axis.

At this time, the curvature radius R of the curve of the battery cell 100 may be 90 mm to 100 mm.

When formed within the curvature radius, it can secure the safety of the battery cell 100, and can be utilized as a flexible battery in a curved shape.

Meanwhile, the battery cell 100 has a structure in which the electrode assembly is incorporated into a battery case 110 together with an electrolyte solution.

At this time, the battery case 110 may be a pouch-type battery case made of a laminated sheet including a resin layer and a metal layer. Specifically, the laminated sheet may be an aluminum laminated sheet.

Meanwhile, the battery case 110 has a direction in which the electrode leads are formed and sealing parts in which both side surfaces thereof are sealed. At this time, the both-sided face sealing parts 111 and 112 have a structure that is bent in the direction of the battery cell 100.

However, when bending the both-sided face sealing parts in a curved battery cell, the widths of the both-sided face sealing parts are not constant due to the curved shape, and thus cannot be sufficiently secured.

In this regard, problems such as leakage of electrolyte solution or penetration of moisture occur in a portion where it is difficult to maintain a sufficiently sealed state.

Therefore, in order to solve these problems, the present disclosure has a structure in which the both-sided face sealing parts are sealed by UV glue coating.

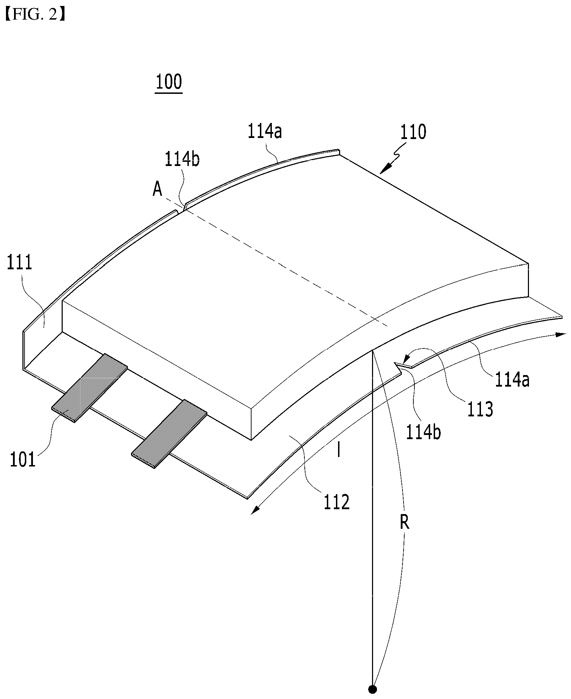

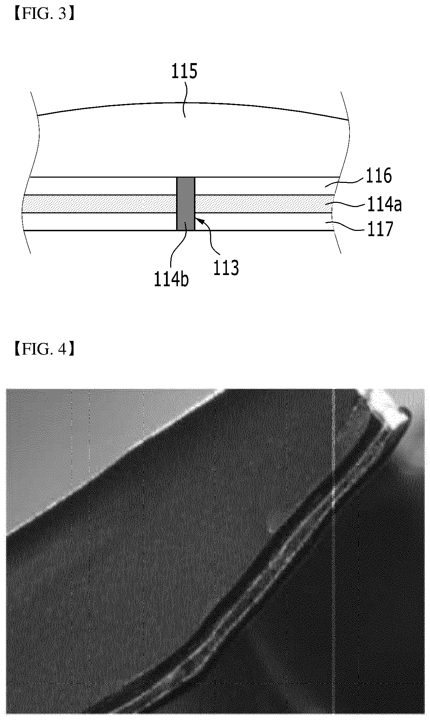

In order to explain these structures in more detail, Fig. 2 schematically shows a state before the one-sided face sealing part 112 is bent in the direction of the battery cell 100 in the battery cell of Fig. 1, Fig. 3 schematically shows a cross-sectional view of one of the both-sided face sealing parts 111 and 112, and Fig. 4 shows a photograph of a battery cell in which both-sided face sealing parts are UV glue-coated.

Referring to Figs. 2 to 4, the both-sided face sealing parts 111 and 112 are sealed by a UV glue coating 114a in which the sided-face sealing part 116 of the upper case and the sided face sealing part 117 of the lower case are adhered to each other through UV glue rather than general sealing such as heat adhesion.

When sealing by the UV glue coating 114a in this way, it is not only possible to prevent electrolyte leakage and moisture penetration, but also to improve the problem of Al exposure of the battery case 110 and increase the sealing strength, thereby capable of minimizing the bent portions of the both-sided face sealing parts 111 and 112 and thus increasing the capacity.

Meanwhile, referring again to Figs. 1 to 3 together, the curved battery cell 100 of the present disclosure is configured such that a cutting part 113 is formed on the both-sided face sealing parts 111 and 112 so that the sealing widths of the both-sided face sealing parts 111 and 112 are ensured and the curves of the both-sided face sealing parts 111 and 112 become natural.

When a cutting part is formed as in the present disclosure at the time of sealing according to general heat sealing which has been heretofore used, sealing was not sufficiently performed in the both-sided face sealing parts, and so the safety problem of electrolyte leakage or moisture penetration was even more serious.

However, according to the present disclosure, these problems can be solved by sealing the both-sided face sealing parts 111 and 112 with UV glue coating 114a.

Therefore, according to the present disclosure, the cutting part 113 for securing the sealing width can be formed on the both-sided face sealing parts 111 and 112 without worrying about electrolyte leakage or moisture penetration.

At this time, the cutting part 113 may be formed within a point of 1/3 to 2/3 of the total length l of the battery cell 100 in the direction in which the electrode lead 101 is formed, specifically, it may be formed within a point of 2/5 to 3/5 which is the intermediate portion, and more specifically, it may be formed at a point of 1/2 based on the drawing, that is, at a position corresponding to the axis A of the curbed central part of the battery cell 100.

Therefore, the cutting part 113 is formed at a position corresponding to the axis A of the curved central part, thereby capable of eliminating the stress concentration at the center of curvature, which is the curved portion, which is preferable.

Further, the cutting part 113 is cut from the outer ends of the both-sided face sealing parts 111 and 112 in an inward direction toward the storage part 115 of the battery case 110, so that stress due to the curve of the battery cell 100 is not concentrated in the center.

At this time, the shape of the cutting part 113 is not limited, and may be formed in an amorphous shape such as a straight line curve. However, in order to ensure the widths of both-sided face sealing parts and realize the curved shape without concentrating the stress caused by a curve of the battery cell 100 in the center and while solving the above problems, it is most preferably formed in a straight line shape or a V-shape, specifically a V-shape. At this time, the V-shape may be formed so that the direction opposite to the curved direction, that is, the direction of the vertex faces downward.

In addition, the cutting part 113 may be formed to a depth of 10% to 70%, specifically a depth of 30% to 70%, and more specifically a depth of 30% to 60% based on the sealing width from the outer ends of the both-sided face sealing parts 111 and 112 toward the storage part 115 of the battery case 110.

If the formation depth of the cutting part 113 is too small outside the above range, the effect obtained by forming the cutting part 113 cannot be sufficiently exhibited, and if the formation depth is too deep, there may be a possibility of electrolyte leakage or moisture penetration despite the UV glue coating 114a, which is therefore not preferable.

Moreover, a UV glue coating 114b can be further formed on the cutting surface of the cutting part 113.

In this case, even when the cutting part 113 is cut after sealing the both-sided face sealing parts 111 and 112, it is possible to drastically reduce the possibility of leakage of the electrolyte solution or penetration of moisture.

If the UV glue coating 114b is further formed after forming the cutting part 113, it is also possible to solve the problem that the Al of the laminated sheet exposed along with the formation of the cutting part 113 is exposed to the outside again. At this time, the UV glue coating may be a coating in which an ultraviolet (UV) curable material is cured, and sealing is achieved by such curing.

At this time, the ultraviolet curable material is a material that exhibits high intermolecular bonding strength while being cross-linked by a chemical reaction when irradiated with ultraviolet rays.

In particular, the ultraviolet curable material may include, for example, at least one material selected from the group consisting of unsaturated polyester-based materials, polyester acrylates, epoxy acrylates, and urethane acrylates.

Further, the ultraviolet curable material may be a material having a hydrophilic function group. In this case, it is possible to collect moisture flowing into the battery, thereby increasing the sealing strength of the battery case and, at the same time, suppressing the penetration of moisture.

The ultraviolet curable material is added to the battery case corresponding to the both-sided face sealing parts in a high viscosity state and then cured to perform sealing, wherein the ultraviolet curable material may be added in the form of an oligomer having a predetermined viscosity or a low molecular weight polymer.

Specifically, the ultraviolet curable material may be added in a state that a viscosity is 18,000 mPa·s to 35,000 mPa·s, and specifically may be added in a state that a viscosity is 24,000 mPa·s to 29,000 mPa·s.

That is, since the ultraviolet curable material of the present disclosure is added to the corresponding site in the form of an oligomer or a low molecular weight polymer having a viscosity within the above range, it is easy to apply, hardly flows even after application, and thus can ensure sufficient sealing strength.

In some cases, the ultraviolet curable material may be added to the corresponding site while being injected under the condition that a thickener is added as a monomer.

Specifically, the thickener capable of increasing the viscosity of the ultraviolet curable material may be, for example, carboxymethyl cellulose, hydroxyethyl cellulose, polyvinyl alcohol, polyvinylacrylate, and the like, and such thickeners can be added to the ultraviolet curable materials to improve the viscosity.

The curved battery cell according to the present disclosure has a curved shape in this way, whereby as the both-sided face sealing parts are bent in a curved shape, the problem that the sealing width is not constant can be solved by the cutting part, and at the same time, the both-sided face sealing parts are sealed with UV glue coating, and furthermore, the cutting surface of the cutting part is further coated with UV glue, thereby solving the safety problem of electrolyte leakage or moisture penetration that may occur due to formation of the cutting part.

According to another embodiment of the present disclosure, there is provided a battery module comprising the above-mentioned battery cell.

Since the manufacturing method and structure of the battery module are well known in the art, a detailed description thereof is omitted herein.

Based on the contents described above, various applications and modifications can be carried out by those of ordinary skill in the art without deviating from the spirit and scope of the present disclosure.

### [Industrial Applicability]

The curved battery cell according to the present disclosure is configured to form the cutting part on the both-sided face sealing parts, so that not only the sealing width of the both-sided faces can be secured and can be constantly realized, but also the both-sided face sealing parts are sealed by UV glue coating and further, a UV glue coating is formed on the cutting surface of the cutting part, so that the battery safety can be secured by solving the problems of electrolyte leakage or moisture permeation due to formation of the cutting part.

Furthermore, it is possible to improve the Al exposure of the battery case by UV glue coating and minimize the bent portion of the both-sided face sealing parts, thus increasing the capacity.

## Claims

1. A battery cell that has a curved shape so that its cross section has a curve, wherein both-sided face sealing parts (111, 112) of a battery case (110) are sealed by UV glue coating (114a) based on the direction in which electrode leads (101) are formed, and a cutting part (113) is formed at a central part in the longitudinal direction of each of the both-sided face sealing parts (111, 112),
and in that a UV glue coating (114b) is further formed on the cutting surface of the cutting part (113).

2. The battery cell according to claim 1, wherein:
the battery cell (100) is formed such that a cross section in a direction in which the electrode lead (101) is formed has a curve in which both side ends are bent together in the same direction with respect to the central part.

3. The battery cell according to claim 1, wherein:
a curvature radius R of the curve of the battery cell (100) is 90 mm to 100 mm.

4. The battery cell according to claim 1, wherein:
the battery case (110) is a pouch-type battery case (110) made of a laminated sheet including a resin layer and a metal layer.

5. The battery cell according to claim 1, wherein:
the both-sided face sealing parts (111, 112) are bent in the direction of the battery cell (100).

6. The battery cell according to claim 1, wherein:
the cutting part (113) is formed within a point of 1/3 to 2/3 of the total length of the both-sided face sealing parts (111, 112) in the direction in which the electrode leads (101) are formed.

7. The battery cell according to claim 1, wherein:
the cutting part (113) is cut from the outer end of the both-sided face sealing part (111, 112) in an inward direction toward the storage part (115) of the battery case (110) so that a stress due to the curve of the battery cell (100) is not concentrated in the center.

8. The battery cell according to claim 7, wherein:
the cutting part (113) is formed in a straight line shape or a V-shape.

9. The battery cell according to claim 7, wherein:
the cutting part (113) is formed to a depth of 10% to 70% based on the sealing width from the outer end of the both-sided face sealing parts (111, 112) toward the storage part (115) of the battery case (110).

10. The battery cell according to claim 1, wherein:
the UV glue coating (114a, 114b) is a coating (114a, 114b) in which an ultraviolet (UV) curable material is cured.

11. The battery cell according to claim 10, wherein:
the UV curable material comprises at least one material selected from the group consisting of unsaturated polyester-based materials, polyester acrylates, epoxy acrylates, and urethane acrylates.

12. A battery module comprising the battery cell (100) as set forth in claim1.

## Patentansprüche

1. Batteriezelle, welche eine gekrümmte Form aufweist, sodass ihr Querschnitt eine Krümmung aufweist,
wobei beidseitige Flächenversiegelungsteile (111, 112) eines Batteriegehäuses (110) durch UV-Klebstoffbeschichtung (114a) bezogen auf die Richtung, in welcher Elektrodenleitungen (101) gebildet sind, versiegelt sind, und ein Schnittteil (113) an einem mittleren Teil in der Längsrichtung jedes der beidseitigen Flächenversiegelungsteile (111, 112) gebildet ist,
und eine UV-Klebstoffbeschichtung (114b) ferner auf der Schnittfläche des Schnittteils (113) gebildet ist.

2. Batteriezelle nach Anspruch 1, wobei:
die Batteriezelle (100) derart gebildet ist, dass ein Querschnitt in einer Richtung, in welcher die Elektrodenleitung (101) gebildet ist, eine Krümmung aufweist, bei der beide Seitenenden in dieselbe Richtung in Bezug auf den mittleren Teil zusammengebogen sind.

3. Batteriezelle nach Anspruch 1, wobei:
ein Krümmungsradius R der Krümmung der Batteriezelle (100) 90 mm bis 100 mm beträgt.

4. Batteriezelle nach Anspruch 1, wobei:
das Batteriegehäuse (110) ein Batteriegehäuse vom Pouch-Typ (110) ist, welches aus einer laminierten Folie hergestellt ist, welche eine Harzschicht und eine Metallschicht umfasst.

5. Batteriezelle nach Anspruch 1, wobei:
die beidseitigen Flächenversiegelungsteile (111, 112) in die Richtung der Batteriezelle (100) gebogen sind.

6. Batteriezelle nach Anspruch 1, wobei:
der Schnittteil (113) innerhalb eines Punktes von 1/3 bis 2/3 der Gesamtlänge der beidseitigen Flächenversiegelungsteile (111, 112) in der Richtung gebildet ist, in welcher die Elektrodenleitungen (101) gebildet sind.

7. Batteriezelle nach Anspruch 1, wobei
der Schnittteil (113) von dem äußeren Ende des beidseitigen Flächenversiegelungsteils (111, 112) in einer Einwärtsrichtung in Richtung des Speicherteils (115) des Batteriegehäuses (110) geschnitten ist, so dass eine Spannung aufgrund der Krümmung der Batteriezelle (100) nicht in der Mitte konzentriert ist.

8. Batteriezelle nach Anspruch 7, wobei:
der Schnittteil (113) in einer geraden Linienform oder einer V-Form gebildet ist.

9. Batteriezelle nach Anspruch 7, wobei:
der Schnittteil (113) bis zu einer Tiefe von 10 % bis 70 % gebildet ist, bezogen auf die Versiegelungsbreite von dem äußeren Ende der beidseitigen Flächenversiegelungsteile (111, 112) in Richtung des Speicherteils (115) des Batteriegehäuses (110).

10. Batteriezelle nach Anspruch 1, wobei:
die UV-Klebstoffbeschichtung (114a, 114b) eine Beschichtung (114a, 114b) ist, in welcher ein ultraviolett (UV) härtbares Material gehärtet ist.

11. Batteriezelle nach Anspruch 10, wobei:
das UV-härtbare Material wenigstens ein Material umfasst, welches ausgewählt ist aus der Gruppe bestehend aus ungesättigten Polyester-basierten Materialien, Polyesteracrylaten, Epoxyacrylaten und Urethanacrylaten.

12. Batteriemodul, umfassend die Batteriezelle (100) gemäß Anspruch 1.

## Revendications

1. Cellule de batterie qui a une forme incurvée de sorte que sa section transversale présente une courbe, dans laquelle des parties d'étanchéité faciales doubles-faces (111, 112) d'un boîtier de batterie (110) sont fermées de manière étanche par un revêtement de colle UV (114a) sur la base de la direction dans laquelle des fils d'électrode (101) sont formés et une partie de découpe (113) est formée au niveau d'une partie centrale dans la direction longitudinale de chacune des parties d'étanchéité faciales doubles-faces (111, 112), et un revêtement de colle UV (114b) est en outre formé sur la surface de découpe de la partie de découpe (113).

2. Cellule de batterie selon la revendication 1, dans laquelle :
la cellule de batterie (100) est formée de sorte qu'une section transversale dans une direction dans laquelle le fil d'électrode (101) est formé présente une courbe dans laquelle les deux extrémités latérales sont cintrées ensemble dans la même direction par rapport à la partie centrale.

3. Cellule de batterie selon la revendication 1, dans laquelle :
un rayon de courbure R de la courbe de la cellule de batterie (100) est de 90 mm à 100 mm.

4. Cellule de batterie selon la revendication 1, dans laquelle :
le boîtier de batterie (110) est un boîtier de batterie de type poche (110) constitué d'une feuille stratifiée comportant une couche de résine et une couche métallique.

5. Cellule de batterie selon la revendication 1, dans laquelle :
les parties d'étanchéité faciales doubles-faces (111, 112) sont cintrées dans la direction de la cellule de batterie (100).

6. Cellule de batterie selon la revendication 1, dans laquelle :
la partie de découpe (113) est formée à un point dans la plage de 1/3 à 2/3 de la longueur totale des parties d'étanchéité faciales doubles-faces (111, 112) dans la direction dans laquelle les fils d'électrode (101) sont formés.

7. Cellule de batterie selon la revendication 1, dans laquelle :
la partie de découpe (113) est découpée à partir de l'extrémité extérieure de la partie d'étanchéité faciale double-face (111, 112) dans une direction vers l'intérieur en direction de la partie de stockage (115) du boîtier de batterie (110), de sorte qu'une contrainte due à la courbe de la cellule de batterie (100) n'est pas concentrée au centre.

8. Cellule de batterie selon la revendication 7, dans laquelle :
la partie de découpe (113) est formée en une forme de ligne droite ou une forme de V.

9. Cellule de batterie selon la revendication 7, dans laquelle :
la partie de découpe (113) est formée jusqu'à une profondeur de 10 % à 70 % sur la base de la largeur d'étanchéité depuis l'extrémité extérieure des parties d'étanchéité faciales doubles-faces (111, 112) en direction de la partie de stockage (115) du boîtier de batterie (110).

10. Cellule de batterie selon la revendication 1, dans laquelle :
le revêtement de colle UV (114a, 114b) est un revêtement (114a, 114b) dans lequel un matériau durcissable par ultraviolets (UV) est durci.

11. Cellule de batterie selon la revendication 10, dans laquelle :
le matériau durcissable par UV comprend au moins un matériau choisi dans le groupe consistant en des matériaux insaturés à base de polyester, des acrylates de polyester, des acrylates d'époxy et des acrylates d'uréthane.

12. Module de batterie comprenant la cellule de batterie (100) selon la revendication 1.
